# EUROPÄISCHE PATENTSCHRIFT

(11) **EP 0 499 953 B1**
(45) Veröffentlichungstag und Bekanntmachung des Hinweises auf die Patenterteilung: **05.11.1997**
(21) Anmeldenummer: 92102300.8
(22) Anmeldetag: 12.02.1992
(51) Int. Cl.: H04N 5/33, H04N 5/235

(54) **Verfahren zur automatischen Kontrast- und Helligkeitsregelung für in Flugzeuge integrierte Wärmebildgeräte**
Method for automatic contrast and brightness control for a built-in aircraft thermal-imaging apparatus
Procédé pour le réglage automatique de la luminosité et du contraste d'un appareil d'imagerie thermique intégré dans un avion

(30) Priorität: 18.02.1991 DE 4104886
(43) Veröffentlichungstag der Anmeldung: 26.08.1992
(73) Patentinhaber: Zeiss-Eltro Optronic GmbH, 73447 Oberkochen (DE)
(72) Erfinder: Wittrin, Gerd, W-7080 Aalen (DE)
(74) Vertreter: Hummel, Adam

(56) Entgegenhaltungen:
- GB-A- 2 219 461
- PATENT ABSTRACTS OF JAPAN vol. 14, no. 95 (E-892)21. Februar 1990 & JP-A-12 98 878
- PATENT ABSTRACTS OF JAPAN vol. 15, no. 36 (E-1027)29. Januar 1991 & JP-A-22 74 073
- PATENT ABSTRACTS OF JAPAN vol. 15, no. 22 (E-1024)18. Januar 1991 & JP-A-22 68 080

## Beschreibung

Die Erfindung bezieht sich auf ein Verfahren zur automatischen Kontrast- und Helligkeitsregelung für Wärmebildgeräte von in Flugzeugen integrierten forward-looking-infrared (FLIR)-Systemen, bei dem für die Istwertbildung des Kontrastes und der Helligkeit ein Ausschnitt des FLIR-Bildes benutzt wird.

***Aus der GB-A-2 219 461 ist ein Videosystem bekannt, bei dem für die Istwertbildung des Kontrastes und der Helligkeit ein Ausschnitt des Videobildes benutzt wird. Form und Lage des Ausschnittes werden in Abhängigkeit vom Inhalt des Bildes verschoben. Damit wird die Wiedergabe eines Objektes vor bezüglich der Helligkeit stark unterschiedlichem Hintergrund verbessert.***

In das Waffensystem Flugzeug sind zur Zielaufklärung und Zielbekämpfung forward-lookong-infrared (FLIR)-Systeme integriert, die den operationellen Wirkungsgrad des Flugzeuges erhöhen und den Piloten entlasten sollen. Wesentlicher Bestandteil des FLIR-Systems ist ein Wärmebildgerät, das entsprechend der Infrarot-Strahlung der betrachteten Szene ein sichtbares Bild auf einem TV-Monitor (FLIR-Bild) erzeugt. Heiße Ziele mit starker Infrarot-Strahlung werden dabei weiß dargestellt und kalte Ziele mit niedriger Infrarot-Strahlung schwarz.

Zur Entlastung des Piloten ist ***auch*** das FLIR-System ***in der Regel*** mit einer automatischen Kontrast- und Helligkeitsregelung ausgestattet, die dazu dienen soll, die für den Piloten besonders wichtigen Szenen unterhalb des Horizonts kontrastreich und mit mittlerer Helligkeit darzustellen. Üblicherweise wird dies dadurch erreicht, daß für die Istwertbildung der Kontrast- und Helligkeitsregelung nicht das gesamte FLIR-Bild, sondern nur ein horizontaler, streifenförmiger Ausschnittt, im weiteren _{"}Bewertungsfenster" genannt, benutzt wird. Die obere Grenze des Kontrast- und Helligkeitsfensters verläuft dabei in der Nähe der Horizontlinie, wie sie in der Normalfluglage sichtbar ist. Die untere Grenze liegt vom unteren Bildrand so weit entfernt, daß die durch die Fluggeschwindigkeit rasch wechselnden Szenen die Kontrast- und Helligkeitsregelung nicht beeinflussen.

Nachteile dieser Lösung ergeben sich bei starken Rollbewegungen des Flugzeuges, bei denen größere Flächen des Himmels und kleinere Flächen der Erde auf dem Monitor abgebildet werden als beim Normalflug. Beim Erscheinen größerer schwarzer Flächen auf dem Monitor setzt nämlich die automatische Kontrast- und Helligkeitsregelung des Systems ein und reagiert dahingehend, daß der Kontrast des Wärmebildes abgeschwächt und seine Helligkeit erhöht wird, woraus in diesem Fall für den Piloten ein kontrastarmes, flaues Bild entsteht.

Der Erfindung liegt die Aufgabe zugrunde, die automatische Kontrast- und Helligkeitsregelung für Wärmebildgeräte in Flugzeugen bei Rollbewegungen des Flugzeugs zu verbessern.

***Diese Aufgabe wird bei einem Verfahren des eingangs genannten Art durch die im kennzeichnenden Teil des Patentanspruches aufgeführten Merkmale gelöst.***

Durch die geeignet gewählte und vorgegebene Form des Bewertungsfensters für die Kontrast- und Helligkeitsregelung und durch seine automatisch geregelte Verschiebung wird verhindert, daß bei Rollbewegungen bis annähernd 90° der kalte Himmel in das Bewertungsfenster hineinragt und die Kontrast- und Helligkeitsregelung ungünstig beeinflußt. Die mit der Erfindung erzielten Vorteile bestehen also insbesondere darin, daß bei Rollbewegungen des Flugzeuges bis annähernd 90° die Helligkeit im Wärmebild nicht aufgehellt wird und der Kontrast nicht abgeschwächt wird, was eine wesentliche Verbesserung für die Erkennbarkeit der Szenendetails bei Rollbewegungen bewirkt.

Die Erfindung und die Auswirkung der Erfindung ist in der Zeichnung dargestellt und wird im folgenden näher beschrieben. Im einzelnen zeigen
- Figur 1: ein erfindungsgemäßes Bewertungsfenster bei Normalfluglage;
- Figur 2: das in Figur 1 dargestellte Bewertungsfenster in erfindungsgemäß verschobener Lage bei ca. 70° Rollneigung des Flugzeuges;
- Figur 3: die Darstellung der Verschiebbarkeit des erfindungsgemäßen Bewertungsfensters;
- Figur 4: ein Blockschaltbild für das erfindungsgemäße Regelsystem für die automatische Kontrast- und Helligkeitsregelung;
- Figur 5: die Darstellung eines an sich bekannten Bewertungsfensters für die Kontrast- und Helligkeitsregelung in einem Wärmebild bei Normalfluglage (Stand der Technik);
- Figur 6: das in Figur 5 dargestellte Bewertungsfenster bei ca. 90° Rollneigung des Flugzeugs (Stand der Technik).

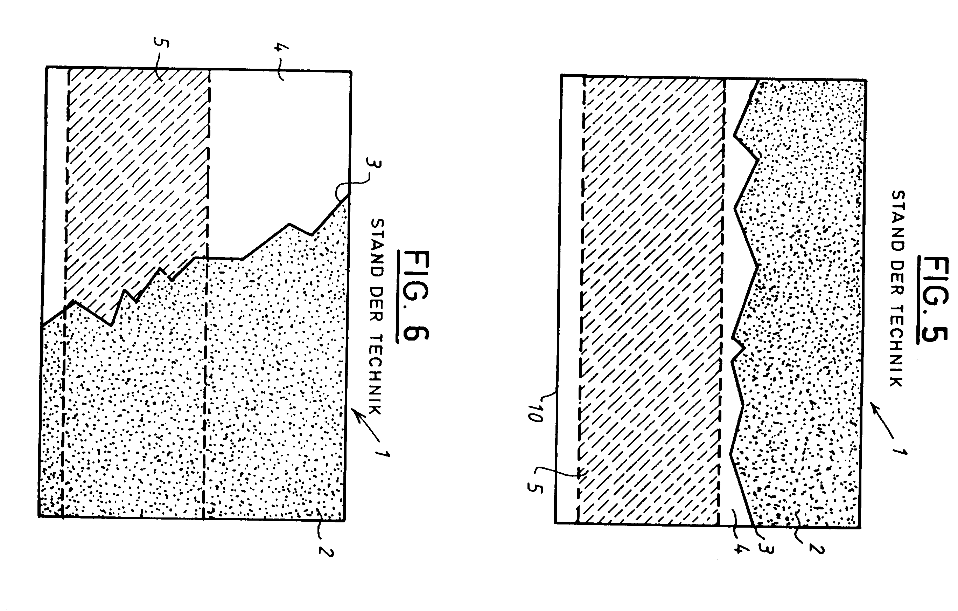

In den Figuren 5, 6, 1 und 2 ist mit dem Bezugszeichen (1) das FLIR-Bild bezeichnet, das auf dem Bildschirm eines TV-Monitors von einer, von einem FLIR-System aufgenommenen Szene entsteht. Der Himmel, der für das FLIR-System ein kaltes Ziel darstellt, ist durch schwarze Punkte symbolhaft in schwarz dargestellt und mit dem Bezugszeichen (2) gekennzeichnet. Die Erde als heißes Ziel ist weiß dargestellt und mit dem Bezugszeichen (4) versehen. Die Horizontlinie (3) trennt in der Darstellung des Wärmebildes Himmel und Erde.

Aus der Darstellung der Figuren 5 und 6 geht hervor, wie ein aus dem Stand der vorbenutzten Technik bekanntes Bewertungsfenster für die Kontrast- und Helligkeitsregelung wirkt. Es ist aus der Zeichnung ersichtlich, daß die obere Grenze des rechteckigen Bewertungsfensters (5) ungefähr entlang der Horizontlinie (3) verläuft. Die untere Grenze des Kontrast- und Helligkeitsfensters (5) liegt so weit vom unteren Bildrand (10) entfernt, daß die durch die Fluggeschwindigkeit rasch wechselnden Szenen für die Istwertbildung der Kontrast- und Helligkeitsregelung nicht berücksichtigt werden.

Aus der Darstellung der Figur 6 geht hervor, daß bei starken Rollbewegungen des Flugzeuges große Bereiche des kalten Himmels (2) im Bewertungsfenster (5) wirksam werden. Die automatische Kontrast- und Helligkeitsregelung reagiert darauf dahingehend, daß sie wegen des extremen Temperaturunterschiedes zwischen dem kalten Himmel (2) und der warmen Erde (4) den Kontrast des Wärmebildes abschwächt und seine Helligkeit erhöht.

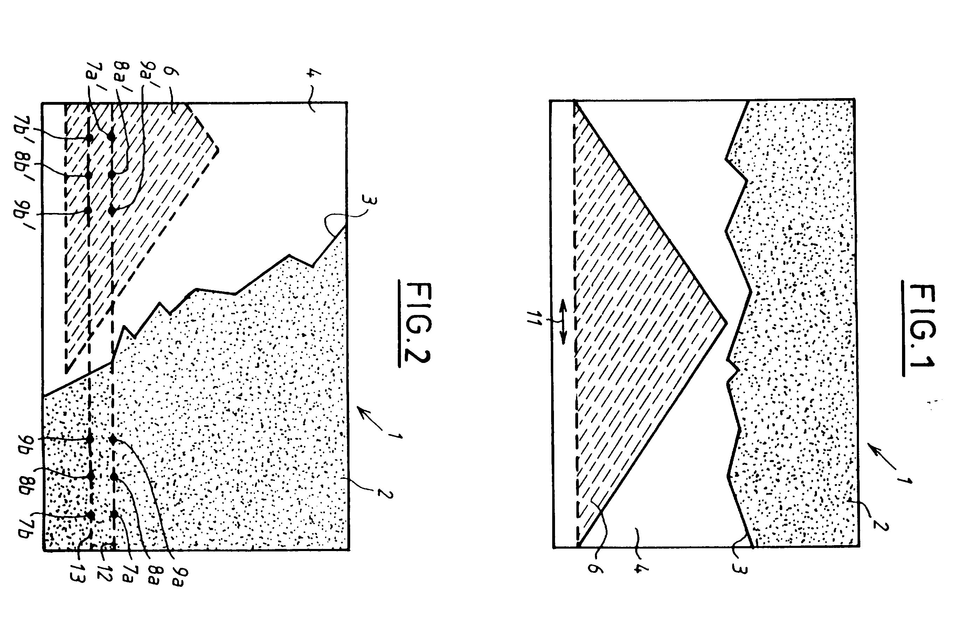

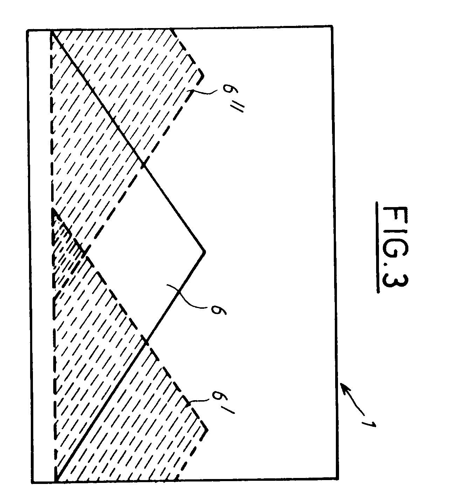

Aus den Darstellungen der Figuren 1 und 2 geht die Wirkungsweise des erfindungsgemäßen Bewertungsfensters (6) für die Kontrast- und Helligkeitsregelung hervor. Die Form des Bewertungsfensters ist nicht, wie aus dem vorbenutzten Stand der Technik bekannt, ein horizontal verlaufendes Rechteck, sondern sie ist den Anforderungen der Flugbedingungen und des überflogenen Geländes angepaßt; im gezeigten Ausführungsbeispiel ist sie ein gleichschenkliges Dreieck, das horizontal in beiden Richtungen verschiebbar ist, wie durch den Doppelpfeil (11) angedeutet. Das Steuersignal für die Verschiebung des Bewertungsfensters (6) wird durch Auswerten der dem unteren Bildrand entsprechenden Zeilen im FLIR-System erreicht. Hierzu werden die Zeilen ausgehend vom linken und vom rechten Bildrand in bestimmten Abständen hinsichtlich der Helligkeits-Amplitude abgefragt. In der Darstellung der Figur 2 sind die abgefragten Zeilen mit (12) und (13) gekennzeichnet, die abgefragten Stellen in den Zeilen im rechten Bildrand mit (7a,7b,8a,8b,9a,9b) und im linken Bildrand mit (7a', 7b', 8a', 8b', 9a', 9b'). Wenn die Abfrage keine Amplitude ergibt, entspricht dies einem schwarzen Bild bzw. der Darstellung des kalten Himmels. Ist beispielsweise die Rollbewegung im Gegenuhrzeigersinn, so ragt der Himmel (2) bis in den rechten unteren Bildrand hinein. Die Auswertung der Zeilen (12) und (13) in den Punkten (7a,7b,8a,8b,9a,9b) ergibt, daß keine Amplitude vorhanden ist. Aufgrund dieser Information wird ein Steuersignal generiert, welches das Bewertungsfenster nach links, in die in Figur 2 gezeichnete Lage, verschiebt. Der kalte Himmel ragt dann bei dieser Rollbewegung des Flugzeuges nicht mehr in das Bewertungsfenster hinein und kann die Kontrast- und Helligkeitsregelung in dieser verschobenen Lage des Bewertungsfensters (6) nicht mehr beeinflussen.

In der Darstellung der Figur 3 sind drei verschiedene Stellungen eines dreieckförmigen Bewertungsfensters (6) gezeichnet. Im Normalflug befindet es sich in der Stellung (6), bei einer Rolbewegung des Flugzeuges im Uhrzeigersinn wird es in die Stellung (6') verschoben, bei einer Rollbewegung des Flugzeuges im Gegenuhrzeigersinn in die Stellung (6''). Für die Verschiebung des Bewertungsfensters werden keine Daten vom Flugzeug benötigt. Die Verschiebung wird allein vom Regelsystem in Abhängigkeit des Inhaltes des FLIR-Bildes veranlaßt.

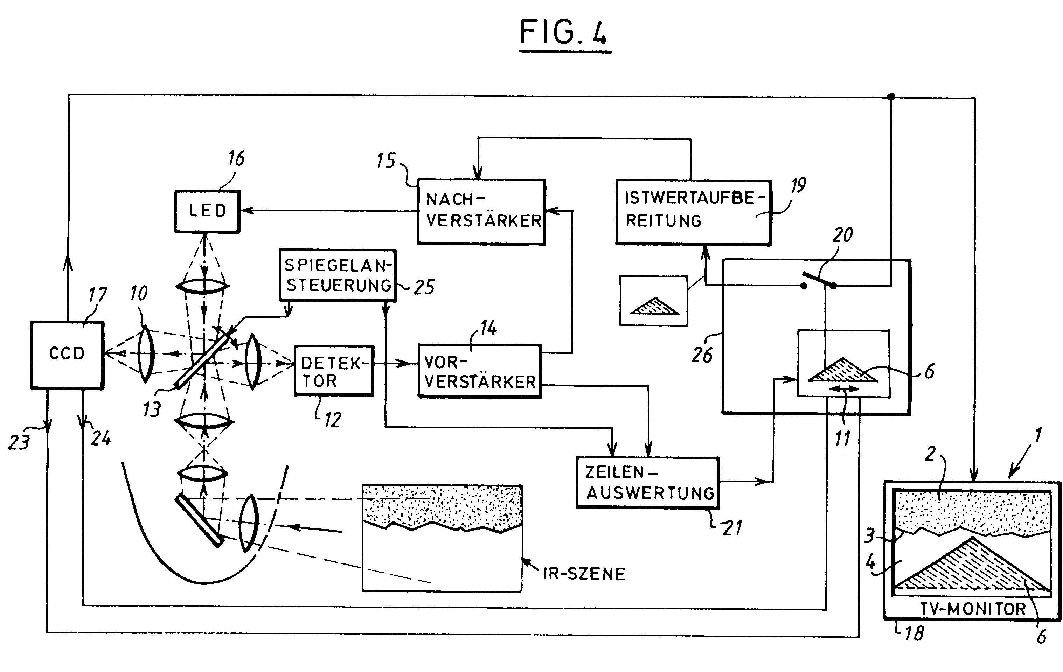

Das in der Abbildung der Fig. 4 gezeigte Blockdiagramm zeigt eine Realisierungsmöglichkeit für das erfindungsgemäße Regelsystem. Das im FLIR-System verwendete, an sich bekannte Abtastverfahren wird als Parallel-scanverfahren bezeichnet. Es kennzeichnet sich dadurch, daß in einer Spalte angeordnete IR-Detektorelemente (12), (180 Einzelelemente) mit Hilfe eines Schwingspiegels (13) die Infrarotszene abtasten und die Infrarotsignale dieser Szene in elektrische Signale umwandeln. Eine Verstärkerkette, bestehend aus 180 Vorverstärkern (14) und 180 Nachverstärkern (15) steuert eine ebenfalls aus 180 Elementen bestehende Leuchtdiodenzeile (LED) (16) an, deren sichtbares Licht auf die Rückseite des Schwingspiegels (13) gelenkt wird. Durch eine Abbildungsoptik (10) wird auf diese Weise phasengleich zum Abtastvorgang ein sichtbares Bild auf dem Detektorarray einer CCD-Kamera (17) erzeugt. Die in Fig. 4 eingezeichnete Abbildungsoptik des Wärmebildgerätes ist nicht im einzelnen bezeichnet. Die CCD-Kamera (17) transformiert das sichtbare Bild in ein der CCIR-Fernsehnorm entsprechendes serielles Videosignal, das über einen Monitor (18) für den Anwender sichtbar wird. Die Kontrast- und Helligkeitsverstellung erfolgt durch Verstärkungsänderung und Offsetverschiebung in den Nachverstärkern (15). Die Regelung für Kontrast und Helligkeit erfolgt, ausgehend vom TV-Videosignal der CCD-Kamera (17) über das Bewertungsfenster (6) zur Istwertaufbereitung (19) zum Eingang der Nachverstärker (15). In der Istwertaufbereitung (19) werden die TV-Signale umgewandelt in DC-Spannungssignale. Der Schalter (20) ist nur im Bereich des Bewertungsfensters (6) geschlossen. Die Verschiebung des Bewertungsfensters (6) in die Richtungen (11) erfolgt über die Zeilenauswerteschaltung (21). Die Form des Bewertungsfensters, im gezeichneten Ausführungsbeispiel ein gleichschenkeliges Dreieck, wird in nichtflüchtige Speicherbausteine (z.B. EBROM), die in Fig. 6 nicht eingezeichnet sind, abgelegt. Um die Auslesung des Bewertungsfensters (6) aus den Speicherbausteinen mit dem Fernsehbild (1) zu synchronisieren, werden die von der CCD-Kamera erzeugten Horizontal-Synchronimpulse (23) (Kennzeichnung für jeden Fernseh-Zeilenanfang) und vertikalen Synchronimpulse (24) (Kennzeichnung für den Beginn jeden Fernsehbildes) benutzt. Die Verschiebung des Bewertungsfensters (6) wird nach dem Auslesen aus den Speicherbausteinen mit Hilfe des Fensterverschiebesignals erreicht, welches in der Zeilenauswerteschaltung (21) erzeugt wird. Die Zeilenauswerteschaltung (21) mißt die von den Verstärkern (14) kommenden, für die Auswertung definierten IR-Zeilensignale der Auswertepunkte (7a, b - 9a, b und 7'a, b - 9'a, b) kontinuierlich. Für die Generierung (26) des Verschiebesignals für das Bewertungsfenster (6) werden jedoch nur die Amplitudenwerte an den Auswertepunkten ausgewertet. Für die horizontale Lage der Auswertepunkte wird die Position des Schwingspiegels (13), die aus der Schwingspiegelansteuerung (25) erhalten wird, als Basis benutzt.

## Patentansprüche

1. Verfahren zur automatischen Kontrast- und Helligkeitsregelung für Wärmebildgeräte von in Flugzeugen integrierten forward-looking-infrared (FLIR)-Systemen, bei dem für die Istwertbildung des Kontrastes und der Helligkeit ein Ausschnitt des FLIR-Bildes benutzt wird, **dadurch gekennzeichnet,**
- daß die Form des Ausschnittes als gleichschenkliges Dreieck (6) vorgegeben wird, das im Normalflug so im FLIR-Bild (1) angeordnet ist, daß seine Basis etwas oberhalb des unteren Randes der Erdszenerie (4) liegt und sich über deren gesamte Breite erstreckt und daß die Spitze des gleichschenkligen Dreieckes (6) sich etwas unterhalb der Horizontlinie (3) befindet und
- daß die Lage des Ausschnittes im FLIR-Bild (1) in Abhängigkeit des Inhaltes des FLIR-Bildes (1) in horizontaler Richtung so verschoben wird, daß der kalte Himmel bei einer Rollbewegung des Flugzeuges nicht in den Ausschnitt ragt.

## Claims

1. Process for automatic contrast and brightness control for thermal-imaging apparatus of forward-looking-infrared systems (FLIR) integrated in aircraft, in which a section of the FLIR image is utilised for nominal value determination of contrast and brightness, **characterised in that**
- the form of the section is given as an isosceles triangle (6), which in normal flight is arranged in the FLIR image (1) in such a manner that its base is positioned slightly above the bottom edge of the ground scenery (4) and extends over its entire width and that the peak of the isosceles triangle (6) is positioned slightly below the horizontal line (3), and
- the position of the section in the FLIR image (1) is displaced in the horizontal direction in dependence on the content of the FLIR image (1), so that the cold sky does not enter into the section during a rolling movement.

## Revendications

1. Procédé de réglage automatique de contraste et de luminosité pour des appareils d'imagerie thermique dans des systèmes de caméras infrarouges frontales (FLIR) intégrés dans des avions, selon lequel on utilise une portion de l'image FLIR pour former la valeur effective du contraste et de la luminosité, caractérisé
- en ce que la forme de la portion d'image est prédéfinie en tant que triangle (6) équilatéral qui, en vol normal est positionné dans l'image FLIR (1) de telle sorte que sa base soit située légèrement au-dessus du bord inférieur de la scène au sol (4) et s'étende sur toute la largeur de celle-ci et que le sommet du triangle (6) équilatéral soit situé légèrement en-dessous de la ligne d'horizon (3) et
- en ce que l'on décale la position de la portion dans l'image FLIR (1) en fonction du contenu de l'image FLIR (1) dans la direction horizontale de telle sorte que lors d'un mouvement de roulis de l'avion, le ciel, qui est froid, n'entre pas dans la portion d'image.
